# DEMANDE DE BREVET EUROPEEN

(11) **EP 0 600 781 A1**
(43) Date de publication de la demande: **08.06.1994**
(21) Numéro de dépôt: 93402885.3
(22) Date de dépôt: 29.11.1993
(51) Int. Cl.: G01M 1/24, F16D 3/205

(54) **Procédé de rattrapage de jeu et d'équilibrage dynamique d'un dispositif de transmission, et dispositif en comportant application**

(30) Priorité: 03.12.1992 FR 9214576
(71) Demandeur: GKN GLAENZER SPICER, F-78955 Carrières-sous-Poissy (FR)
(72) Inventeur: Guimbretiere, Pierre, F-78640 Neauphle-Le-Chateau (FR)
(74) Mandataire: Moncheny, Michel

(57) **Abrégé**

La présente invention concerne les dispositifs de transmission comportant au moins une articulation et/ou au moins une liaison coulissante et vise plus particulièrement le rattrapage des jeux et l'équilibrage dynamique de tels dispositifs.

L'invention consiste principalement à déséquilibrer volontairement une partie interne ou "flottante" du dispositif, suffisamment pour excéder le balourd aléatoire résultant des jeux radiaux existant dans les articulations (20) ou liaisons coulissantes.

L'équilibrage ultérieur de l'ensemble du dispositif de transmission est ainsi rendu réellement efficace.

## Description

La présente invention concerne les dispositifs de transmission comportant au moins une articulation et/ou au moins une liaison coulissante et vise plus particulièrement le rattrapage des jeux et l'équilibrage dynamique de tels dispositifs.

Ces dispositifs peuvent être définis comme comportant au moins une partie externe centrée par rapport à un élément de structure, et au moins une partie interne reliée à la partie externe par au moins une articulation et/ou au moins une liaison coulissante. S'il n'est prévu qu'une seule articulation ou une seule liaison, cette dernière comporte deux éléments reliés respectivement aux parties externe et interne adjacentes du dispositif. S'il est prévu deux articulations reliées par un arbre intermédiaire de transmission, la partie interne du dispositif comprend l'arbre intermédiaire et les éléments des articulations auxquels il est relié.

Par ailleurs une liaison de coulissement peut être associée à l'articulation ou bien à au moins l'une des articulations.

Ces dernières peuvent être constituées par des joints de cardan, des joints de type tripode, des joints à billes ou par tout autre joint connu.

Quelle que soit leur structure, il est en général nécessaire de procéder à un équilibrage dynamique de tels dispositifs de transmission, du fait des vitesses de rotation rencontrées en cours d'utilisation. Un équilibrage dynamique revient à essayer de faire coïncider l'axe matériel de rotation imposé par les centrages des parties externes du dispositif, avec l'axe principal d'inertie longitudinal de l'ensemble, lequel est déterminé par les masses en présence et leurs positions relatives. Un tel équilibrage peut être effectué assez aisément dans le cas d'un arbre simple, plein ou tubulaire mais il est pratiquement impossible à obtenir avec des dispositifs de transmission tels que définis ci-dessus, comportant au moins une articulation et/ou une liaison coulissante. En effet une telle articulation présente des jeux radiaux dus aux tolérances de fabrication des différentes pièces qui la constituent, et de la nécessité pour ces différentes pièces de pouvoir se déplacer les unes par rapport aux autres sans contrainte. Les moyens de liaison coulissants, en général du type à cannelures, présentent eux aussi des jeux radiaux relativement importants.

Ce problème d'équilibrage dynamique trouve son origine dans le fait qu'on ne peut éliminer le balourd résiduel égal au produit de la masse de la partie interne du dispositif de transmission par la valeur du jeu radial existant dans la ou les articulations et/ou liaisons. De plus, les valeurs du déséquilibre constatées à l'occasion d'un contrôle ou en cours d'utilisation ne coïncident pas avec la valeur nominale relevée lors de l'opération d'équilibrage. Cela est dû au fait que lors de chaque mise en rotation, le jeu radial existant entre les différentes pièces constitutives du dispositif est rattrapé suivant une direction qui dépend de la position angulaire de la transmission au moment de sa mise en rotation.

Il en résulte des vibrations plus ou moins erratiques qui sont bien évidemment préjudiciables pour le confort de l'utilisateur.

Le but de cette invention est de proposer un procédé permettant de résoudre ce problème d'équilibrage dynamique et de réaliser un dispositif de transmission susceptible d'être équilibré de façon plus efficace que dans l'état de la technique analysé ci-dessus.

A cet effet l'invention a pour objet un procédé de rattrapage de jeu dans un dispositif rotatif de transmission, comprenant au moins une partie externe centrée, en utilisation, par rapport à un élément de structure et ayant un axe bien défini, et au moins une partie interne reliée à la partie externe par au moins une articulation et/ou au moins une liaison coulissante présentant un jeu radial, la ou chaque partie interne présentant une latitude de débattement radial résultant dudit jeu radial, caractérisé en ce qu'on déséquilibre au moins une pièce appartenant à une partie interne du dispositif, ce déséquilibre étant supérieur à celui pouvant résulter, lors de la mise en rotation du dispositif, du jeu existant dans la ou chaque articulation et/ou liaison.

Elle a également pour objet un procédé d'équilibrage d'un dispositif rotatif de transmission comprenant au moins une partie externe centrée, en utilisation, par rapport à un élément de structure et ayant un axe bien défini, et au moins une partie interne reliée à la partie externe par au moins une articulation et/ou au moins une liaison coulissante présentant un jeu radial, la ou chaque partie interne présentant une latitude de débattement radial résultant dudit jeu radial, caractérisé en ce qu'on déséquilibre au moins une pièce appartenant à la partie interne, ce déséquilibre étant supérieur à celui pouvant résulter, lors de la mise en rotation du dispositif, du jeu existant dans la ou chaque articulation et/ou liaison coulissante, puis on procède à l'équilibrage de l'ensemble du dispositif en agissant, de façon connue, sur au moins une pièce appartenant à une partie externe, centrée par rapport à un élément de structure.

Suivant d'autres caractéristiques :
- le déséquilibre précité est obtenu par excentration d'au moins une partie de la pièce appartenant à la partie interne, ou par ajout ou retrait de matière dans au moins une zone excentrée de ladite pièce ;
- si m représente la masse de la partie excentrée, e la distance d'excentration par rapport à l'axe de rotation de la pièce déséquilibrée, M la masse de la partie interne à laquelle appartient la pièce déséquilibrée, et j le jeu radial inhérent à l'articulation et/ou à la liaison coulissante, on respecte la relation suivante : m x e > M x j.
- la pièce déséquilibrée est proche de l'articulation et/ou liaison présentant un jeu radial

L'invention a également pour objet un dispositif de transmission comportant application de l'un ou l'autre des procédés définis ci-dessus.

L'invention va être décrite plus en détails ci-dessous en se référant aux dessins annexés, donnés uniquement à titre d'exemple et sur lesquels :

La Fig. 1 est une vue en partie en élévation et en partie en coupe longitudinale d'une transmission dans laquelle est mis en oeuvre le procédé suivant l'invention;

La Fig. 2 est une vue en partie en élévation et en partie en coupe d'un deuxième mode de réalisation de l'invention.

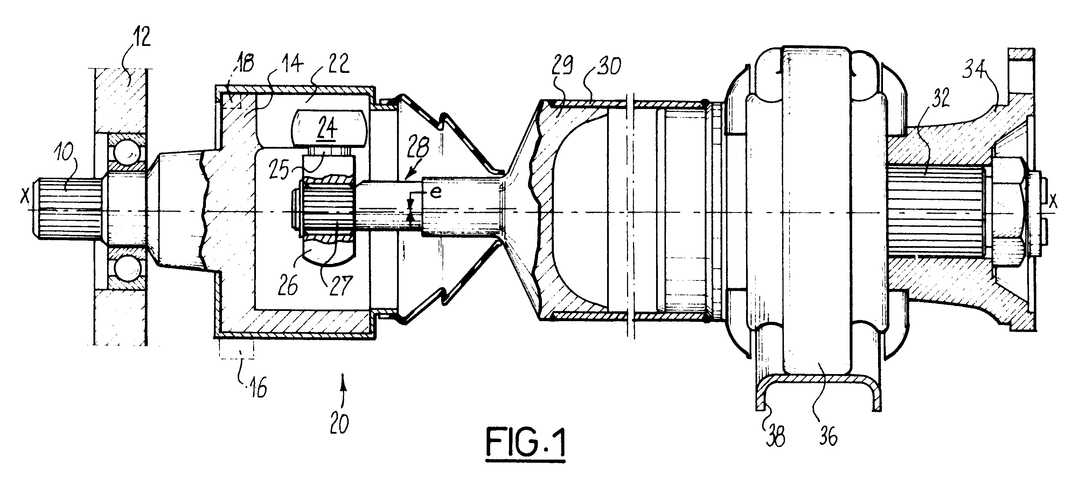

On voit sur la Fig. 1 un dispositif de transmission comprenant un organe menant 10 d'axe X-X, centré au montage par rapport à un élément de structure 12. Cet organe menant est solidaire d'une tulipe 14 faisant partie d'une articulation 20 du type joint tripode. Cette tulipe délimite de façon classique trois paires de chemins de roulement 22 avec lesquels coopèrent trois galets sphériques 24 disposés sur trois tourillons 25 orientés à 120° les uns par rapport aux autres. Le bloc 26 délimitant les tourillons est lui-même porté à une extrémité cannelée 27 d'un embout 28 dont l'autre extrémité 29 de diamètre plus important est soudée sur un arbre creux 30.

Les cannelures 27 et l'arbre creux 30 sont centrés sur le même axe X-X que la tulipe du joint homocinétique, dans la position alignée de la transmission.

Cet ensemble est complété par un soufflet 31, de façon connue en soi.

A son extrémité opposée, l'arbre creux 30 porte un embout cannelé 32 solidaire d'un flasque 34 destiné à être relié à un organe récepteur et il est centré par un roulement 36 par rapport à un élément de structure 38.

Selon l'invention, la partie de l'embout 28 comprise entre l'extrémité cannelée et la zone de soudure sur l'arbre tubulaire 30 est au moins en partie excentrée d'une valeur e par rapport à l'axe X-X.

Si l'on désigne par m la masse de la partie excentrée et par e la distance d'excentration, par M la masse de l'ensemble constitué par le tube 30, l'embout 28 et l'ensemble du bloc tripode 24, 25, 26, 27, et par j le jeu radial existant dans le joint homocinétique, on doit choisir m et e de telle façon que m x e > M x j.

Il est à noter que ce jeu radial a une valeur maximale connue j mais que sa position est indéterminée par construction.

M x j caractérise ou mesure le balourd engendré dans la transmission par l'existence du jeu j dans l'articulation. Grâce au déséquilibre systématique prévu selon l'invention, ce jeu j, lors de la mise en rotation de la transmission, est rattrapé pour une position relative des éléments de la transmission qui est toujours la même. Dans ces conditions, il est possible de réaliser un équilibrage global du dispositif de transmission, par exemple par un ajout ou un retrait de matière sur la tulipe du joint (comme représenté en 16 et 18). Cet équilibrage dynamique étant réalisé, sera efficace, puisque comme indiqué ci-dessus, lors du lancement en rotation de la transmission la pièce portant le tripode se déportera, dans les limites du jeu j, toujours suivant la même orientation et dans la même position relative par rapport à la tulipe. L'équilibrage de l'ensemble de la transmission peut ainsi être efficace et le problème exposé dans le préambule de ce mémoire est bien résolu.

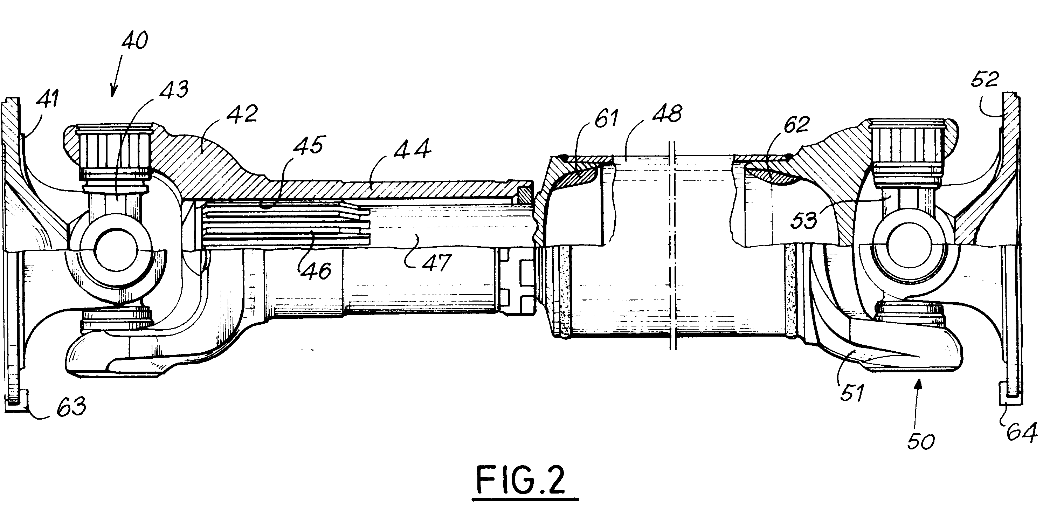

La Fig. 2 représente un autre exemple d'application de l'invention : il s'agit d'une transmission comprenant une première articulation 40 constituée par un joint de cardan dont une première mâchoire 41 est destinée à être reliée à un organe menant (non représenté).

La deuxième mâchoire 42 de ce joint, reliée à la première par un croisillon 43, est solidaire d'un manchon 44 muni de cannelures 45 coopérant avec une série de cannelures 46 d'un tronçon d'arbre 47 qui constitue l'embout d'un arbre de transmission creux 48. Le manchon 44 et l'embout 47 constituent une liaison coulissante autorisant une certaine variation de longueur de la transmission.

L'arbre tubulaire 48 est relié à l'une 51 des mâchoires d'un joint de cardan 50 constituant une deuxième articulation, dont la deuxième mâchoire 52 reliée à la première par un croisillon 53, est reliée à un organe mené (non représenté).

L'organe menant et l'organe mené et les mâchoires 41, 52 sont, lorsque la transmission est montée en position d'utilisation, centrés par rapport à des éléments de structure de sorte que leurs axes de rotation sont parfaitement définis.

Par construction, des jeux radiaux existent au niveau des deux articulations constituées par les joints de cardan 40, 50 et de la liaison coulissante constituée par les cannelures 45, 46.

Selon l'invention, l'embout 47 soudé sur l'arbre de transmission tubulaire comporte au voisinage de son extrémité soudée sur cet arbre une masselotte 61 destinée à introduire un déséquilibre structurel, d'une façon similaire à ce qui a été décrit dans le premier mode de réalisation.

De même, la mâchoire 51 de la deuxième articulation comporte une masselotte excentrée 62.

Dans un exemple de réalisation, si l'on considère la moitié gauche de l'ensemble de la transmission à partir du milieu de l'arbre tubulaire 48, la masse du manchon 44 et de la mâchoire 42 est de l'ordre de 13 kg, la masse de l'embout 47 et du tronçon de tube 48 adjacent est de 10 kg, les jeux radiaux dans le joint de cardan et la liaison coulissante sont respectivement de 0,03 mm et 0,02 mm, environ.

Dans ces conditions, le balourd maximal possible résultant de ces jeux est égal à 13 000 x (0,03 mm) + 10 000 x (0,03 + 0,02 mm).

Ce balourd maximal est donc de l'ordre de 1 000 g.mm. Si la masselotte 61 se trouve à une distance r = 40 mm de l'axe de la pièce, sa masse peut être de l'ordre de 30 g. pour que la condition m x e > M x j soit respectée.

Un calcul analogue est effectué pour la masselotte 62.

Comme dans l'exemple précédent, ce déséquilibre structurel de la partie interne de la transmission étant réalisé, il suffit ensuite d'effectuer l'équilibrage de l'ensemble d'une façon connue en soi en ajoutant ou en retirant une certaine masse de matière, en des emplacements convenables (par exemple 63, 64) des mâchoires 41, 52 des joints de cardan, qui sont centrées, en utilisation, et constituent la partie externe du dispositif.

Dans ce texte, on désigne par "parties externes" du dispositif celles constituées de pièces centrées par rapport à des éléments de structure et dont les axes sont bien définis, et par "parties internes" celles constituées de pièces qui, du fait de l'interposition d'au moins une articulation ou d'une liaison coulissante, ont une certaine latitude de débattement ou de flottement radial, résultant des jeux radiaux existant dans la ou chaque articulation et/ou liaison.

La séparation entre "partie externe" et "partie interne" s'effectue au niveau de l'articulation ou liaison la plus proche de la pièce centrée, une partie de l'articulation ou liaison étant intégrée à la partie externe du dispositif, tandis que l'autre partie est intégrée à la partie interne de ce même dispositif. Ce dernier peut par ailleurs comporter plusieurs parties externes et plusieurs parties internes, selon le nombre et la disposition des centrages et des articulations et/ou liaisons coulissantes.

Cette invention peut être mise en oeuvre dans tout ensemble rotatif comportant une articulation ou un dispositif de liaison présentant un certain jeu radial, en adaptant à chaque cas particulier les principes généraux énoncés ci-dessus.

Elle trouve notamment application dans les transmissions latérales et longitudinales de véhicules ou dans des transmissions utilisées dans différents domaines industriels.

## Revendications

1. Procédé de rattrapage de jeu dans un dispositif rotatif de transmission, comprenant au moins une partie externe (14; 41, 52) centrée, en utilisation, par rapport à un élément de structure et ayant un axe bien défini, et au moins une partie interne (25-30; 42, 44, 47, 48) reliée à la partie externe par au moins une articulation (20; 40, 50) et/ou au moins une liaison coulissante (45, 46) présentant un jeu radial, la ou chaque partie interne présentant une latitude de débattement radial résultant dudit jeu radial, caractérisé en ce qu'on déséquilibre au moins une pièce (28; 47, 51) appartenant à une partie interne du dispositif, ce déséquilibre étant supérieur à celui pouvant résulter, lors de la mise en rotation du dispositif, du jeu existant dans la ou chaque articulation (20; 40, 50) et/ou liaison (45, 46).

2. Procédé d'équilibrage d'un dispositif rotatif de transmission comprenant au moins une partie externe (14; 41, 52) centrée, en utilisation, par rapport à un élément de structure et ayant un axe bien défini, et au moins une partie interne (25-30; 42, 44, 47, 48) reliée à la partie externe par au moins une articulation (20; 40, 50) et/ou au moins une liaison coulissante (45, 46) présentant un jeu radial, la ou chaque partie interne présentant une latitude de débattement radial résultant dudit jeu radial, caractérisé en ce qu'on déséquilibre au moins une pièce (28; 47, 51) appartenant à la partie interne, ce déséquilibre étant supérieur à celui pouvant résulter, lors de la mise en rotation du dispositif, du jeu existant dans la ou chaque articulation et/ou liaison coulissante, puis on procède à l'équilibrage de l'ensemble du dispositif en agissant, de façon connue, sur au moins une pièce (14; 41, 52) appartenant à une partie externe, centrée par rapport à un élément de structure.

3. Procédé suivant l'une des revendications 1 et 2, caractérisé en ce que le déséquilibre est obtenu en excentrant au moins une partie de la pièce (28) appartenant à la partie interne.

4. Procédé suivant l'une des revendications 1 et 2, caractérisé en ce que le déséquilibre est obtenu en ajoutant une masselotte (61, 62) ou en retirant de la matière dans une zone excentrée de ladite pièce (47, 51).

5. Procédé suivant l'une quelconque des revendications 1 à 4, caractérisé en ce qu'on réalise le déséquilibre sur une pièce proche de l'articulation ou liaison coulissante présentant un jeu radial.

6. Procédé suivant l'une quelconque des revendications 1 à 5, caractérisé en ce que si m représente la masse de la partie excentrée, e la distance d'excentration par rapport à l'axe de rotation de la pièce déséquilibrée, M la masse de la partie interne à laquelle appartient la pièce déséquilibrée, et j le jeu radial inhérent à l'articulation et/ou à la liaison coulissante, on respecte la relation suivante : m x e > M x j.

7. Dispositif de transmission comportant application d'un procédé suivant l'une quelconque des revendications précédentes.
